# EUROPEAN PATENT SPECIFICATION

(11) **EP 3 282 739 B1**
(45) Date of publication and mention of the grant of the patent: **06.03.2019**
(21) Application number: 17179974.5
(22) Date of filing: 06.07.2017
(51) Int. Cl.: H04W 16/14, H04W 24/10, H04W 84/12, H04W 52/02, H04W 52/36, H04W 72/08

(54) **MITIGATION OF COEXISTENCE INTERFERENCE AND CONCURRENT OPERATIONS OF DIFFERENT RF TECHNOLOGIES**
ABSCHWÄCHUNG VON KOEXISTENZINTERFERENZ UND SIMULTANBETRIEB VERSCHIEDENER HF-TECHNOLOGIEN
ATTÉNUATION DE L'INTERFÉRENCE DE COEXISTENCE ET OPÉRATIONS SIMULTANÉES DE DIFFÉRENTES TECHNOLOGIES RF

(30) Priority: 06.07.2016 US 201662358610 P
(43) Date of publication of application: 14.02.2018
(73) Proprietor: MediaTek Inc., Hsin-Chu 300, Taiwan (TW)
(72) Inventor: LIAO, Shih-Chieh, 812 Xiaogang Dist., Kaohsiung City (TW); WANG, Chung-Wei, 235 Zhonge Dist., New Taipei City (TW); LEE, Chi-Chen, 110 Taipei City (TW)
(74) Representative: 2K Patentanwälte Blasberg Kewitz & Reichel

(56) References cited:
- EP-A1- 2 693 815
- GB-A- 2 512 877
- US-A1- 2013 324 112
- ERICSSON: "IDC for WLAN integration", 3GPP DRAFT; 36331_CR2197_(REL-13)_R2-164020 - IDC FOR WLAN INTEGRATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Nanjing, P.R. China; 20160523 - 20160527 22 May 2016 (2016-05-22), XP051104812, Retrieved from the Internet: URL:http://www.3gpp.org/ftp/Meetings_3GPP_ SYNC/RAN2/Docs/ [retrieved on 2016-05-22]
- ERICSSON: "IDC for WLAN integration", 3GPP DRAFT; R2-164018 - IDC FOR WLAN INTEGRATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Nanjing, P.R. China; 20160523 - 20160527 22 May 2016 (2016-05-22), XP051105351, Retrieved from the Internet: URL:http://www.3gpp.org/ftp/Meetings_3GPP_ SYNC/RAN2/Docs/ [retrieved on 2016-05-22]
- NOKIA NETWORKS: "In-Device Coexistence for LWA", 3GPP DRAFT; R2-156484 IDC FOR LWA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Anaheim, USA; 20151116 - 20151120 16 November 2015 (2015-11-16), XP051005888, Retrieved from the Internet: URL:http://www.3gpp.org/ftp/Meetings_3GPP_ SYNC/RAN2/Docs/ [retrieved on 2015-11-16]

## Description

### TECHNICAL FIELD

The present disclosure is generally related to in-device coexistence and, more particularly, to mitigation of coexistence interference and concurrent operations of different radio frequency (RF) technologies.

### BACKGROUND

Unless otherwise indicated herein, approaches described in this section are not prior art to the claims listed below and are not admitted as prior art by inclusion in this section,

With the prevalence of various wireless technologies and the ever-popular use of applications and services that utilize wireless technologies, it is inevitable that more and more portable electronic devices, such as smartphones, tablet computers and smart glasses, equipped with multiple RF transceivers to enable the device for wireless communications via different radio access technologies (RATs). For example, a user equipment (UE) like a smartphone may be capable of wireless communications in accordance with one or more of the Institute of Electrical and Electronics Engineers (IEEE) 802.11 standards (e.g., Wi-Fi), one or more of Long-Term Evolution (LTE)-based standards, Bluetooth, and the Global Navigation Satellite System (GNSS). Given the typical small form factor of portable electronic devices, the close proximity of multiple RF transceivers of different RATs in the device typically results in so-called in-device coexistence (IDC) interference. For instance, the interference power from a transmitter of a collocated radio may be much higher than the actual received power level of the desired signal for a receiver.

Some typical scenarios of IDC interference involve LTE transceiver(s) coexisting with Wi-Fi and/or Bluetooth transceiver(s) as well as LTE transceiver(s) coexisting with GNSS transceiver(s). For example, a Wi-Fi/Bluetooth transmitter (TX) can interfere an LTE receiver (RX) due to side lobe signal of adjacent channels, and a LTE TX can interfere a Wi-Fi/Bluetooth RX also due to side lobe signal of adjacent channels. Moreover, a Wi-Fi/Bluetooth TX and a LTE TX can interfere an LTE/Bluetooth/Wi-Fi RX due to intermodulation signals, and a Wi-Fi/Bluetooth/LTE TX can interfere a GNSS RX also due to intermodulation signals. Additionally, a Wi-Fi/Bluetooth TX can interfere an LTE RX due to the harmonic signals of a voltage-controlled oscillator (VCO), and an LTE TX can interfere a Wi-Fi/Bluetooth RX due to harmonic signals. Furthermore, the second harmonics of band 13/14 of an LTE transceiver can cause interference with a GNSS transceiver. Also, for certain specific frequency bands, concurrent operations of RF transceivers in the LTE and the industrial, scientific and medical (ISM) radio bands in adjacent or sub-harmonic frequencies can result in significant IDC interference.
Other than IDC interference, there may also be issues with LTE and Wi-Fi concurrent operations. For a UE equipped with LTE and Wi-Fi radio technologies, there currently is no mechanism or technology that can occupy both radio spaces simultaneously. However, with the evolution of the 3rd Generation Partnership Project (3GPP) specification such as R12/R13, features such as LTE and wireless local area network (WLAN) aggregation (LWA), Licensed Assisted Access (LAA), LTE and WLAN interworking (LWI)/radio access network (RAN)-controlled LTE and WLAN interworking (RCLWI), and LTE-WLAN aggregation with IPsec tunnel (LWIP) are introduced for better user experience and increased system capacity by using the ISM band resources. The Wi-Fi resources can be occupied by above-listed features if enabled by the network. As a result, LTE and Wi-Fi concurrent operations can likely cause some issues. For example, when a user tries to activate Wi-Fi and trigger Wi-Fi scanning, it is uncertain whether above-listed features (LWA/LAA/LWI/RCLWI/LWIP) would still work properly. Moreover, when the user tries to connect a home Wi-Fi for surfing the Internet, it is uncertain whether the interruption of Wi-Fi service(s) can be avoided due to above-listed features.
GB2512877 (A) discloses a mobile communications system in which a mobile device is operable to communicate with base stations using a first radio technology and with other devices using a second radio technology. The mobile device maintains a control plane connection with a first base station (which may be a Macro eNB) and a user plane connection via a second base station (which may be a Pico or Femto eNB). If in-device co-existence interference is detected due to concurrent use of the first and second radio technologies, the mobile device provides assistance information to the base stations, based on which the base stations alleviate or reduce the effects of the detected interference. The assistance information may comprise in-device coexistence configuration data (e.g. idc-config data).

EP2693815 (A1) relates to methods for maximum output level reporting by a mobile terminal in a mobile communication system. The invention is also providing apparatus for performing these methods, and computer readable media the instructions of which cause the apparatus to perform the methods described herein. In order to allow for maximum output level reporting, a power management related power backoff value is first calculated for one radio technology by referring to a reception quality level set for communication via the other radio technology; thereafter a lower and upper bounds of a maximum output power level is calculated, then the maximum output power level (P CMAX) for communication is set within the determined lower and upper bounds and finally the set maximum output power level is reported to a base station wherein the lower bound (P CMAX_L) may be calculated using MPR = 0 dB, A - MPR = 0 dB, and optionally T c = 0 dB.

US2013324112 (A1) discloses a radio communication device including a first transceiver configured to transmit and receive signals in accordance with a Cellular Wide Area radio communication technology; a second transceiver configured to transmit and receive signals in accordance with a Short Range radio communication technology or a Metropolitan Area System radio communication technology, the second transceiver comprising a filter having a filter characteristic; a first processor configured to control the first transceiver to transmit signals during a first transmitting period, to determine as to whether a scheduled uplink transmission fulfills a predefined criterion taking into account at least one of the following: at least a part of the filter characteristic of the filter of the second transceiver; a transmission power used for the uplink transmission; and a channel information indicating the physical channel used for the uplink transmission; and a second processor configured to control the second transceiver to receive signals taking into account the transmitting period of the first transceiver; wherein the first processor is further configured to provide an indication signal indicating as to whether the second processor should control the second transceiver to receive a signal or not to receive a signal dependent on whether the scheduled uplink transmission by the first transceiver fulfills the predefined criterion.
The following documents disclose concepts of the WLAN integration into mobile devices:
ERICSSON: "IDC for WLAN integration". 3GPP DRAFT; 36331 CR2197 (REL-13) R2-164020 - IDC FOR WLAN INTEGRATION. 3RD-GENERATION PARTNERSHIP PROJECT (3GPP). MOBILE COMPETENCE CENTRE ; 650. ROUTE DES LUCIOLES ; F-06921 SOPHIA-ANTIPOLIS CEDEX vol. RAN WG2. no. Nanjing. P.R. China; 20160523 - 20160527 22 May 2016 (2016-05-22).
ERICSSON: "IDC for WLAN integration". 1-3 3GPP DRAFT; R2-164018 - IDC FOR WLAN INTEGRATION. 3RD GENERATION PARTNERSHIP PROJECT (3GPP). MOBILE COMPETENCE CENTRE; 650. ROUTE DES LUCIOLES ; F-06921 SOPHIA-ANTIPOLIS CEDEX ; FRANCE vol. RAN WG2. no. Nanjing. P.R. China; 20160523 - 20160527 22 May 2016 (2016-05-22).
NOKIA NETWORKS: "In-Device Coexistence for LWA". 1-3 3GPP DRAFT; R2-156484 IDC FOR LWA. 3RD GENERATION PARTNERSHIP PROJECT (3GPP). MOBILE COMPETENCE CENTRE ; 650. ROUTE DES LUCIOLES ; F-06921 SOPHIA-ANTIPOLIS CEDEX ; FRANCE vol. RAN WG2. no. Anaheim. USA; 20151116-20151120 16 November 2015 (2015-11-16).

Although the current 3GPP specification provides solution to the issue with IDC interference, it does have some limitations. For instance, the IDC message according to the 3GPP specification only allows indication of the following pieces of information: (1) which 4th-generation (4G) frequency (as measurement object) is suffering interference and whether the victim is LTE or another RAT (GNSS/Wi-Fi/Bluetooth); and (2) which uplink (UL) carrier aggregation (CA) band combination and the affected radio. However, when there is need to configure a Wi-Fi measurement object, current IDC message does not allow precise indication of which Wi-Fi band/channel is affected. Also, current IDC message does not allow reporting of a condition when there is no 4G frequency or measurement object interfering Wi-Fi under a given configuration, yet there is a need to simultaneously activate LWA, LAA, LWI, RCLWI and/or LWIP features to satisfy user-triggered operations. Moreover, although UL CA band combination and affected radio can be reported back to the network, current IDC message does not allow precise indication of which Wi-Fi band/channel, Bluetooth channel or GNSS carrier is affected. Furthermore, it is possible to adjust TX/RX power to remove GNSS/Wi-Fi/Bluetooth interference without the need to remove affected 4G frequency (e.g., by handing over to another primary cell (Pcell) or by removing a secondary cell (Scell). However, current IDC message does not allow reporting of this condition.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to propose various novel concepts and schemes pertaining to mitigation of coexistence interference and concurrent operations of different RF technologies. Specifically, the present disclosure provides schemes and/or proposed solutions for avoidance or mitigation of IDC interference between collocated RF transceivers. The present disclosure also provides schemes and/or proposed solutions to address issues with LTE/Wi-Fi concurrent operations.

The invention provides a method according to the appended independent claim. Advantageous embodiments are described in the appended dependent claims.

It is noteworthy that, although description provided herein may be in the context of certain radio access technologies such as LTE, Wi-Fi, Bluetooth and GNSS, the proposed concepts, schemes and any variation(s)/derivative(s) thereof may be implemented for other types of radio access technologies. Thus, the scope of the present disclosure is not limited to the examples described herein.

### BRIEF DESCRIPTION OF THE DRAWINGS

The accompanying drawings are included to provide a further understanding of the disclosure, and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram of an example network environment in which various schemes in accordance with the present disclosure may be implemented.
FIG. 2 is a block diagram of an example apparatus in accordance with an implementation of the present disclosure.
FIG. 3 is a flowchart of an example process in accordance with an implementation of the present disclosure.
FIG, 4 is a flowchart of an example process in accordance with an implementation of the present disclosure.
FIG. 5 is a flowchart of an example process in accordance with an implementation of the present disclosure.
FIG. 6 is a flowchart of an example process in accordance with an implementation of the present disclosure.
FIG. 7 is a flowchart of an example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

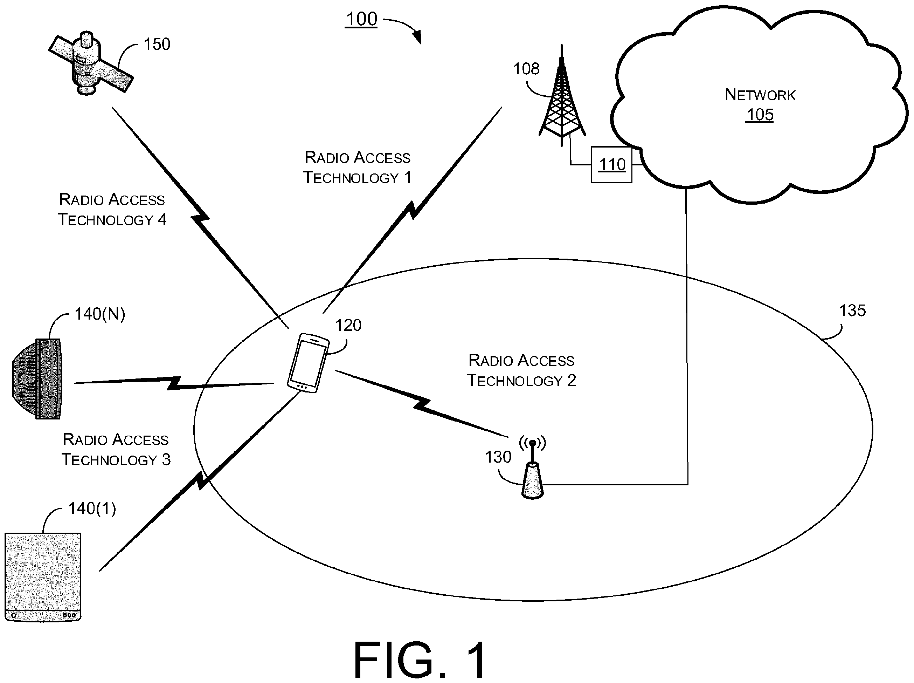

FIG. 1 illustrates an example network environment 100 in which various schemes in accordance with the present disclosure may be implemented. Network environment 100 may involve a network 105 having one or more network nodes such as a network node 110 with an associated ratio tower 108. Network environment 100 may also involve a user equipment (UE) 120 and one or more WLANs such as WLAN 135. WLAN 135 may be associated with an access point (AP) 130. UE 120 may be in wireless communication with or otherwise communicatively connected to network 105 via network node 110 and radio tower 108. UE 120 may also be in wireless communication with or otherwise communicatively connected to AP 130 of WLAN 135. Network environment 100 may be an example and simplified illustration of an implementation of LWA, LAA, LWI, RCLWI and/or LWIP features according to the 3GPP specification, e.g., for the deployment of the 5^{th}-generation (5G), New Radio (NR) and/or Internet-of-Things (loT) networks.

Network 105 may include a wireless network such as a LTE-related network (e.g., a LTE network, a LTE-Advanced network or a LTE-Advanced Pro network). That is, network node 110 may communicate with UE 120 using a first radio access technology (RAT) such as LTE for example (labeled as "radio access technology 1" in FIG. 1). In some implementations, network 105 may also include one or more other types of wireless and/or wired networks that, together, form network 105. WLAN 135 may be based on, for example and without limitation, one or more of the IEEE 802.11 standards. That is, AP 130 may communicate with UE 120 using a second RAT such as Wi-Fi for example (labeled as "radio access technology 2" in FIG. 1).

In addition to the first RAT and the second RAT, UE 120 may be also capable of wireless communications in one or more other RATs such as a third RAT and a fourth RAT. For instance, UE 120 may be capable of wireless communications with one or more Internet-of-Things (loT) devices or appliances, such as devices 140(1) - 140(N), using Bluetooth as the third RAT (labeled as "radio access technology 3" in FIG. 1). Here, N is a positive integer greater than or equal to 1. Moreover, UE 120 may be capable of wireless communications with one or more satellites, such as satellite 150, using GNSS as the fourth RAT (labeled as "radio access technology 4" in FIG. 1). It is noteworthy that, although a finite number of RATs are described in the examples, the number of RATs involved may be different in actual implementations in accordance with the present disclosure.

To address aforementioned issues related to IDC interference and concurrent operations of different RF technologies, the present disclosure proposes various schemes or solutions to avoid or otherwise mitigate such issues. The proposed schemes include network-based solutions, frequency-division multiplexing (FDM)-based solutions, power-based solutions as well as UE-based solutions. These schemes or solutions are described below with reference to FIG. 1.

Under a network-based solution in accordance with the present disclosure, in an event that network node 110 is aware of IDC interference experienced by UE 120 (e.g., based on messages and/or reports received from UE 120), such as interference between LTE and ISM bands, network node 110 may avoid such interference when configuring network 105 and/or UE 120 for wireless communications therebetween. For instance, network node 110 may avoid utilizing one or more frequencies susceptible to interference, whether as an offender or a victim. Moreover, network node 110 may avoid one or more frequencies known to be interfered when configuring measurement objects, so that UE 120 need not measure the interfered frequency/frequencies when performing measurement.

Under another network-based solution in accordance with the present disclosure, one or more new information fields may be embedded in a message sent from UE 120 to network node 110 to indicate IDC interference experienced by UE 120. The message used may be the IDC message according to the 3GPP specification or a new type of message. This solution may address issues with limitation of current IDC message according to the 3GPP specification.

The one or more information fields may indicate the following: (1) an affected carrier and a range of each of one or more of the second RAT, the third RAT and the fourth RAT (e.g., affected carrier and range of Wi-Fi, Bluetooth and/or GNSS); (2) a suggested TX or RX power of UE 120 in a first communication cell of the first RAT (e.g., communication cell with network 105 via network node 110); and (3) a suggested RX power of UE 120 in a second communication cell of the second RAT (e.g., WLAN 135). In some cases, the one or more information fields may also indicate an issue type identifying an issue of a first type or a second type experienced by UE 120. For instance, the first type may relate to IDC interference, and the second type may relate to concurrent operations of different RATs.

In cases when the one or more information fields indicate the affected carrier and the range of each of the one or more other RATs, network node 110 may adjust one or more aspects of either or both of the first communication cell and the second communication cell by performing one or more operations. For instance, network node 110 may request UE 120 to stop measurement of a channel in the affected range of the second RAT in an event that network node 110 has enabled one or more features of a plurality of features with respect to UE 120. Such features may include, for example and without limitation, LWA, LWI, RCLWI and LWIP. Additionally, network node 110 may cease one or more operations requiring usage of the second RAT in an event that network node 110 has enabled one or more features of the plurality of features with respect to UE 120. Moreover, network node 110 may cease transmissions on a secondary cell of the first RAT or avoiding usage of one or more frequency bands on the secondary cell in an event that network node 110 has enabled the feature of LAA with respect to UE 120.

In cases when the one or more information fields indicate the suggested TX or RX power of UE 120 in the first communication cell of the first RAT, network node 110 may adjust one or more aspects of either or both of the first communication cell and the second communication cell by performing one or more operations. For instance, network node 110 may request UE 120 to transmit at a TX power level below a first threshold when UE 120 transmits using the first RAT. This may be an option in an event that the one or more information fields indicate the suggested TX power of UE 120 as a result of the one or more other RATs suffering interference from the first RAT in UE 120. Moreover, network node 110 may communicate with UE 120 at a TX power level above a second threshold when the processor communicates with UE 120 using the first RAT. This may be an option in an event that the one or more information fields indicate the suggested RX power of UE 120 as a result of the first RAT suffering interference from the one or more other RATs in UE 120.

In cases when the one or more information fields indicate the suggested RX power of UE 120 in the second communication cell of the second RAT, network node 110 may adjust one or more aspects of either or both of the first communication cell and the second communication cell by performing one or more operations. For instance, network node 110 may request UE 120 to report a suggested RX power of the second communication cell in an event that network node 110 has enabled one or more features of a plurality of features with respect to UE 120 such as, for example and without limitation, LWA, LWI, RCLWI and LWIP. Additionally, network node 110 may receive a message from UE 120 indicating the suggested RX power of the second communication cell. As a result of receiving the message from UE 120, network node 110 may performing either or both of the following: (1) requesting UE 120 to report a threshold of a measurement report regarding the second RAT, and (2) adjusting a TX power level of AP 130 of the second communication cell.

Under an FDM-based solution in accordance with the present disclosure, network node 110 may configure safe downlink (DL) and uplink (UL) resource blocks for UE 120 in order to avoid frequent handovers. Under the FDM-based solution, network node 110 may receive a message from UE 120 using the first RAT. The message may include frequency information indicating one or more frequencies of the first RAT affecting one or more other RATs different from the first RAT (e.g., the second RAT, the third RAT and/or the fourth RAT). In response to receiving the message, network node 110 may communicate with UE 120 using the first RAT on a frequency other than the one or more frequencies indicated by the frequency information responsive to the receiving of the message.

In some cases, the frequency information may include a frequency bitmap having a plurality of bits with each of the plurality of bits corresponding to a respective frequency of a plurality of frequencies. For instance, bit 0 of the bitmap may correspond to a first frequency (e.g., frequency 0), bit 1 of the bitmap may correspond to a second frequency (e.g., frequency 1), and so on. A first binary value (e.g., 0) of each bit of the plurality of bits may indicate the respective frequency being a non-interfering frequency with respect to the one or more other RATs. Conversely, a second binary value (e.g., 1) of each bit of the plurality of bits may indicate the respective frequency being an interfering frequency with respect to the one or more other RATs.

In some cases, the frequency information may include a plurality of frequency bitmaps each of which corresponding to a respective one of a plurality of scenarios. These scenarios may include, for example and without limitation, the following: (1) TX using at least one of the one or more other RATs interfering RX using the first RAT in UE 120 in an event that dual-band dual-cell (DBDC) is disabled; (2) TX using the first RAT interfering RX using at least one of the one or more other RATs in UE 120 in an event that carrier aggregation (CA) is disabled; (3) TX using at least one of the one or more other RATs interfering RX using the first RAT in an event that DBDC is enabled; and(4) TX using the first RAT interfering RX using at least one of the one or more other RATs in UE 120 in an event that CA is enabled.

Under a power-based solution in accordance with the present disclosure, network node 110 may receive a message from UE 120. For instance, network node 110 may receive the message from UE 120 using the first RAT. The message may include an information field indicating reduction in a TX power level utilized by network node 110 (e.g., via radio tower 108) due to IDC interference experienced by UE 120 which is capable of wireless communications using the first RAT and one or more other RATs different from the first RAT. In response to receiving the message, network node 110 may adjust (e.g., lower) the TX power level of transmission by radio tower 108. In some cases, in receiving the message from UE 120, network node 110 may receive a power headroom report that includes the information field.

Under a power-based solution in accordance with the present disclosure, UE 120 may send a notification to network node 110. For instance, UE 120 may detect IDC interference between two or more RATs of the plurality of RATs utilized by UE 120 for wireless communications. UE 120 may also detect reduction in a RX power level of UE 120 due to the IDC interference. Moreover, UE 120 may report to network node 110 using the first RAT of the plurality of RATs about the reduction in the RX power level.

In some cases, in addition to the above actions, UE 120 may perform either or both of the following: (1) changing a secondary cell that communicates using the first RAT in an event that LAA is enabled; and (2) changing a downlink resource block (RB) assignment utilized in wireless communications using the first RAT.

Under a UE-based solution in accordance with the present disclosure, UE 120 may perform one or more operations depending on which one or more of the features of LWA, LWI, RCLWI, LWIP and LAA is/are enabled or otherwise activated. Under the UE-based solution, UE 120 may detect IDC interference between two or more RATs of the plurality of RATs utilized by UE 120 for wireless communications. In response to the detection of the IDC interference, UE 120 may perform one or more of the following operations: (1) adjusting a TX power level when transmitting using one or more RATs of the plurality of RATs in an event that one or more the features of LWA, RCLWI, LWIP and LAA is/are enabled; (2) prioritizing measurement of Wi-Fi channels in an event that at least one of the features of LWA, RCLWI and LWIP is enabled; and (3) skipping an interfered frequency that suffers the IDC interference in a measurement report sent to network node 110 by reporting measurements on one or more frequencies except for the interfered frequency in an event that LAA is enabled.

In some cases, in prioritizing the measurement of Wi-Fi channels, UE 120 may perform one or more of the following: (1) measuring one or more Wi-Fi channels not affected by the IDC interference; (2) reporting to network node 110 a result of the measuring; and (3) transmitting a WLAN status report (WLAStatusReport) to network node 110 to indicate the IDC interference on WLAN in an event that at least one of LWA, RCLWI and LWIP is enabled. In reporting to network node 110 the result of the measuring, UE 120 may report a measurement of each of the one or more Wi-Fi channels not affected by the IDC interference. Additionally, UE 120 may report no measurement of a Wi-Fi channel affected by the IDC interference, or UE 120 may report a predefined value (e.g., a low value) for the Wi-Fi channel affected by the IDC interference, with the predefined value indicative of the IDC interference.

In some cases, in skipping the interfered frequency that suffers the IDC interference in the measurement report sent to network node 110, UE 120 may identify the interfered frequency among a plurality of frequencies to prevent the interfered frequency from becoming a candidate for use by a secondary cell for LAA. Additionally, UE 120 may send the measurement report in an IDC message.

### Illustrative Implementations

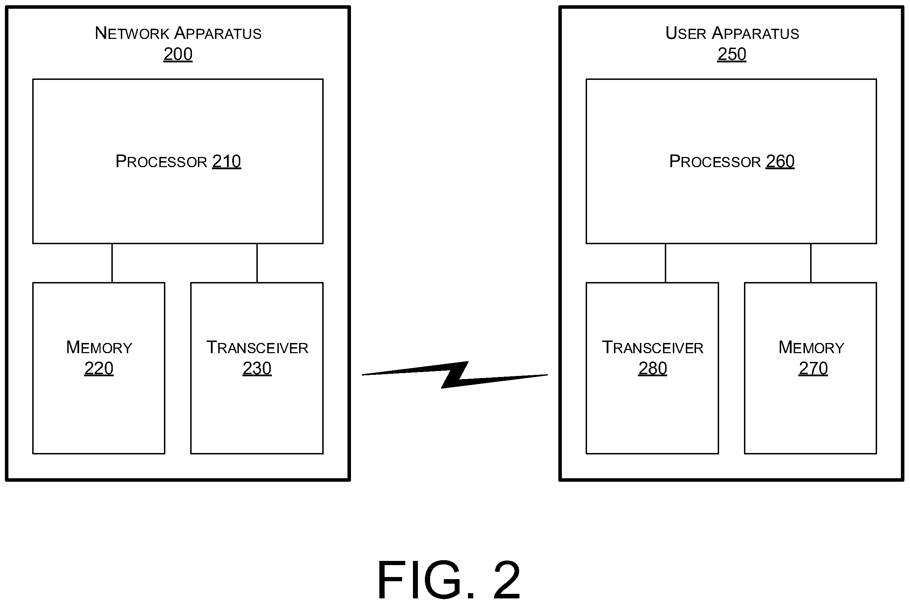

FIG. 2 illustrates an example network apparatus 200 and an example user apparatus 250 in accordance with an implementation of the present disclosure. Each of network apparatus 200 and user apparatus 250 may perform various functions to implement schemes, techniques, processes and methods described herein pertaining to mitigation of coexistence interference and concurrent operations of different RF technologies, including the various schemes described above with respect to network environment 100 as well as processes 300, 400, 500, 600 and 700 described below.

User apparatus 250 may be a part of an electronic apparatus, which may be a UE such as a portable or mobile apparatus, a wearable apparatus, a wireless communication apparatus or a computing apparatus. For instance, user apparatus 250 may be implemented in or as a smartphone, a smartwatch, a personal digital assistant, a digital camera, or a computing equipment such as a tablet computer, a laptop computer or a notebook computer. User apparatus 250 may also be a part of a machine type apparatus, which may be an Internet-of-Things (loT) apparatus such as an immobile or a stationary apparatus, a home apparatus, a wire communication apparatus or a computing apparatus. For instance, user apparatus 250 may be implemented in a smart thermostat, a smart fridge, a smart doorlock, a wireless speaker or a home control center. Alternatively, user apparatus 250 may be implemented in the form of one or more integrated-circuit (IC) chips such as, for example and without limitation, one or more single-core processors, one or more multi-core processors, or one or more complex-instruction-set-computing (CISC) processors. User apparatus 250 may be an example implementation of UE 120 in network environment 100. User apparatus 250 may include at least some of those components shown in FIG. 2 such as a processor 260, for example. User apparatus 250 may further include one or more other components not pertinent to the proposed scheme of the present disclosure (e.g., internal power supply, display device and/or user interface device), and, thus, such component(s) of user apparatus 250 are neither shown in FIG. 2 nor described below in the interest of simplicity and brevity.

Network apparatus 200 may be a part of an electronic apparatus, which may be a network node such as a base station, a small cell, a router or a gateway. For instance, network apparatus 200 may be implemented in or as an eNodeB in a LTE, LTE-Advanced or LTE-Advanced Pro network or, alternatively, implemented in or as a gNB in a 5G, NR or loT network. Alternatively, network apparatus 200 may be implemented in the form of one or more IC chips such as, for example and without limitation, one or more single-core processors, one or more multi-core processors, or one or more CISC processors. Network apparatus 200 may be an example implementation of network node 110 in network environment 100. Network apparatus 200 may include at least some of those components shown in FIG. 2 such as a processor 210, for example, Network apparatus 200 may further include one or more other components not pertinent to the proposed scheme of the present disclosure (e.g., internal power supply, display device and/or user interface device), and, thus, such component(s) of network apparatus 200 are neither shown in FIG. 2 nor described below in the interest of simplicity and brevity.

In one aspect, each of processor 210 and processor 260 may be implemented in the form of one or more single-core processors, one or more multi-core processors, or one or more CISC processors. That is, even though a singular term "a processor" is used herein to refer to processor 210 and processor 260, each of processor 210 and processor 260 may include multiple processors in some implementations and a single processor in other implementations in accordance with the present disclosure. In another aspect, each of processor 210 and processor 260 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 210 and processor 260 is a special-purpose machine specifically designed, arranged and configured to perform specific tasks pertaining to mitigation of coexistence interference and concurrent operations of different RF technologies in accordance with various implementations of the present disclosure.

In some implementations, user apparatus 250 may also include a transceiver 280 coupled to processor 260 and capable of wirelessly transmitting and receiving data. Accordingly, user apparatus 250 and network apparatus 200 may wirelessly communicate with each other via transceiver 280 and transceiver 230, respectively. In some implementations, transceiver 230 may be capable of wirelessly transmitting and receiving signals and data using a first RAT based on one or more LTE-related standards. In some implementations, transceiver 280 may be capable of wirelessly transmitting and receiving signals and data using the first RAT and at least a second RAT. For instance, transceiver 280 may be also capable of wirelessly transmitting and receiving signals and data using the second RAT, which may be based on one or more IEEE 802.11-related standards (e.g., Wi-Fi). It is noteworthy that, although examples provided herein are in the context of LTE, IEEE 802.11 (Wi-Fi), Bluetooth and GNSS, different radio access technologies may also be utilized in various implementations.

In some implementations, user apparatus 250 may further include a memory 270 coupled to processor 260 and capable of being accessed by processor 260 and storing data therein. In some implementations, network apparatus 200 may also include a transceiver 230 coupled to processor 210 and capable of wirelessly transmitting and receiving data. In some implementations, network apparatus 200 may further include a memory 220 coupled to processor 210 and capable of being accessed by processor 210 and storing data therein. Each of memory 220 and memory 270 may include a type of random access memory (RAM) such as dynamic RAM (DRAM), static RAM (SRAM), thyristor RAM (T-RAM) and/or zero-capacitor RAM (Z-RAM). Alternatively or additionally, each of memory 220 and memory 270 may include a type of read-only memory (ROM) such as mask ROM, programmable ROM (PROM), erasable programmable ROM (EPROM) and/or electrically erasable programmable ROM (EEPROM). Alternatively or additionally, each of memory 220 and memory 270 may include a type of nonvolatile random-access memory (NVRAM) such as flash memory, solid-state memory, ferroelectric RAM (FeRAM), magnetoresistive RAM (MRAM) and/or phase-change memory.

In the interest of brevity and to avoid repetition, detailed description of the capabilities and functions of each of network apparatus 200 and user apparatus 250 is provided below with respect to processes 300, 400, 500, 600 and 700.

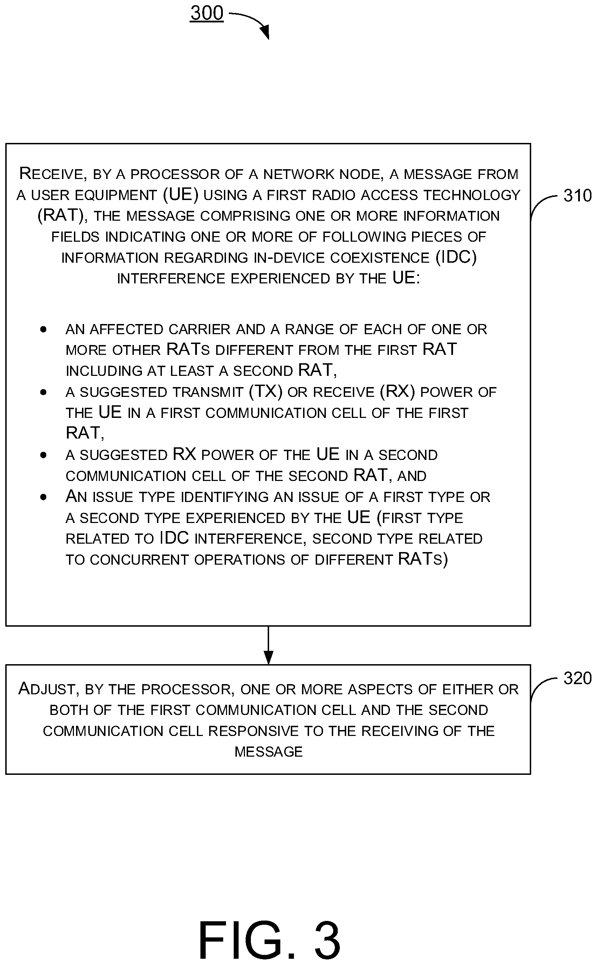

FIG, 3 illustrates an example process 300 in accordance with an implementation of the present disclosure. Process 300 may represent an aspect of implementing the proposed concepts and schemes such as one or more of the various schemes described above for addressing the first potential issue and/or the second potential issue. More specifically, process 300 may represent an aspect of the proposed concepts and schemes pertaining to mitigation of coexistence interference and concurrent operations of different RF technologies. For instance, process 300 may be an example implementation of the network-based solutions described above. Process 300 may include one or more operations, actions, or functions as illustrated by one or more of blocks 310 and 320. Although illustrated as discrete blocks, various blocks of process 300 may be divided into additional blocks, combined into fewer blocks, or eliminated, depending on the desired implementation. Moreover, the blocks/sub-blocks of process 300 may be executed in the order shown in FIG. 3 or, alternatively in a different order. The blocks/sub-blocks of process 300 may be executed iteratively. Process 300 may be implemented by or in apparatus 200 and/or apparatus 250 as well as any variations thereof. Solely for illustrative purposes and without limiting the scope, process 300 is described below in the context of apparatus 200 implemented as network node 110 in network environment 100. Process 300 may begin at block 310.

At 310, process 300 may involve processor 210 of apparatus 200 receiving, via transceiver 230, a message from apparatus 250 (e.g., as UE 120 in network environment 100) using a first RAT. The message may include one or more information fields. The one or more information fields may indicate one or more pieces of information regarding IDC interference experienced by apparatus 250, including: (1) an affected carrier and a range of each of one or more other RATs different from the first RAT including at least a second RAT, (2) a suggested TX or RX power of apparatus 250 in a first communication cell of the first RAT, (3) a suggested RX power of apparatus 250 in a second communication cell of the second RAT, and (4) an issue type identifying an issue of a first type or a second type experienced by apparatus 250 as UE 120. The first type may relate to IDC interference, and the second type may relate to concurrent operations of different RATs. Process 300 may proceed from 310 to 320.

At 320, process 300 may involve processor 260 adjusting one or more aspects of either or both of the first communication cell and the second communication cell in response to the receiving of the message. The message may be, for example and without limitation, a physical layer (PHY) signaling, a media access control layer (MAC) control element or a radio resource control (RRC) message,

In some implementations, the first RAT may be based on one or more LTE-related standards, and the second RAT may be based on one or more IEEE 802.11-related standards (e.g., Wi-Fi). Moreover, the one or more other RATs may further include a third RAT based on Bluetooth and a fourth RAT based on GNSS.

In an event that the one or more information fields indicate the affected carrier and the range of each of the one or more other RATs, in adjusting the one or more aspects of either or both of the first communication cell and the second communication cell, processor 210 may perform one or more operations. For instance, processor 210 may request apparatus 250 to stop measurement of a channel in the affected range of the second RAT in an event that processor 210 has enabled one or more features of a plurality of features with respect to apparatus 250, such as LWA, RCLWI and LWIP. Additionally or alternatively, processor 210 may cease one or more operations requiring usage of the second RAT in an event that processor 210 has enabled one or more features of the plurality of features with respect to apparatus 250. Additionally or alternatively, processor 210 may cease transmissions on a secondary cell of the first RAT, avoid usage of one or more frequency bands, or reschedule data to one or more resource blocks not suffering the IDC interference on the secondary cell in an event that processor 210 has enabled the feature of LAA with respect to apparatus 250.

In an event that the one or more information fields indicate the suggested TX or RX power of apparatus 250 in the first communication cell of the first RAT, in adjusting the one or more aspects of either or both of the first communication cell and the second communication cell, processor 210 may perform one or more operations. For instance, processor 210 may request apparatus 250 to transmit at a TX power level below a first threshold when apparatus 250 transmits using the first RAT in an event that the one or more information fields indicate the suggested TX power of apparatus 250 as a result of the one or more other RATs suffering interference from the first RAT in apparatus 250. Additionally or alternatively, processor 210 may adjust, via transceiver 230, TX power used in communication with apparatus 250 to a TX power level above a second threshold when processor 210 communicates with apparatus 250 using the first RAT in an event that the one or more information fields indicate the suggested RX power of apparatus 250 as a result of the first RAT suffering interference from the one or more other RATs in apparatus 250.

In an event that the one or more information fields indicate the suggested RX power of apparatus 250 in the second communication cell of the second RAT, in adjusting the one or more aspects of either or both of the first communication cell and the second communication cell, processor 210 may perform one or more operations. For instance, processor 210 may request apparatus 250 to report a suggested RX power of the second communication cell in an event that processor 210 has enabled one or more features of a plurality of features with respect to apparatus 250, such as LWA, RCLWI and LWIP. Additionally or alternatively, processor 210 may receive, via transceiver 230, a message from apparatus 250 indicating the suggested RX power of the second communication cell. Additionally or alternatively, processor 210 may perform either or both of the following: (1) requesting apparatus 250 to report a threshold of a measurement report carrying the suggested RX power regarding the second RAT, and (2) adjusting a TX power level of AP 130 of the second communication cell.

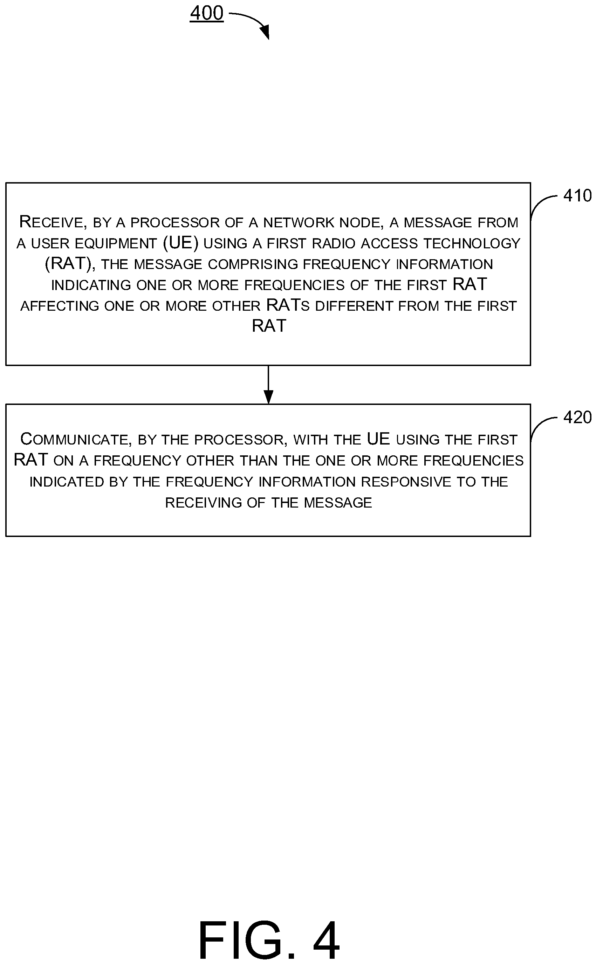

FIG. 4 illustrates an example process 400 in accordance with an implementation of the present disclosure. Process 400 may represent an aspect of implementing the proposed concepts and schemes such as one or more of the various schemes described above for addressing the first potential issue and/or the second potential issue. More specifically, process 400 may represent an aspect of the proposed concepts and schemes pertaining to mitigation of coexistence interference and concurrent operations of different RF technologies. For instance, process 400 may be an example implementation of the FDM-based solutions described above. Process 400 may include one or more operations, actions, or functions as illustrated by one or more of blocks 410 and 420. Although illustrated as discrete blocks, various blocks of process 400 may be divided into additional blocks, combined into fewer blocks, or eliminated, depending on the desired implementation. Moreover, the blocks/sub-blocks of process 400 may be executed in the order shown in FIG. 4 or, alternatively in a different order. The blocks/sub-blocks of process 400 may be executed iteratively. Process 400 may be implemented by or in apparatus 200 and/or apparatus 250 as well as any variations thereof. Solely for illustrative purposes and without limiting the scope, process 400 is described below in the context of apparatus 200 implemented as network node 110 in network environment 100. Process 400 may begin at block 410.

At 410, process 400 may involve processor 210 of apparatus 200 receiving, via transceiver 230, a message from apparatus 250 (e.g., as UE 120 in network environment 100) using a first radio access technology (RAT). The message may include frequency information indicating one or more frequencies of the first RAT affecting one or more other RATs different from the first RAT. Process 400 may proceed from 410 to 420.

At 420, process 400 may involve processor 210 communicating, via transceiver 230, with apparatus 250 using the first RAT on a frequency other than the one or more frequencies indicated by the frequency information responsive to the receiving of the message.

In some implementations, the first RAT may be based on one or more LTE-related standards, and the second RAT may be based on one or more IEEE 802.11-related standards (e.g., Wi-Fi). Moreover, the one or more other RATs may further include a third RAT based on Bluetooth and a fourth RAT based on GNSS.

In some implementations, the frequency information may include a frequency bitmap having a plurality of bits with each of the plurality of bits corresponding to a respective frequency of a plurality of frequencies. In some implementations, a first binary value of each bit of the plurality of bits indicates the respective frequency being a non-interfering frequency with respect to the one or more other RATs. In some implementations, a second binary value of each bit of the plurality of bits indicates the respective frequency being an interfering frequency with respect to the one or more other RATs.

In some implementations, the frequency information may include a plurality of frequency bitmaps each of which corresponding to a respective one of a plurality of scenarios. The scenarios may include: (1) a first type of scenarios between LTE-based and Wi-Fi-based wireless communications, (2) a second type of scenarios between LTE-based and Bluetooth-based wireless communications, and (3) a third type of scenarios between LTE-based and GNSS-based wireless communications. In some implementations, the first type of scenarios may include, for example and without limitation, LTE-based receiving (RX) interfered by Wi-Fi-based transmission (TX) when dual-band dual-cell (DBDC) is disabled, LTE-based TX interfering Wi-Fi-based RX when carrier aggregation (CA) is disabled, LTE-based RX interfering Wi-Fi-based TX when DBDC is enabled, and LTE-based TX interfering Wi-Fi-based RX when CA is enabled. In some implementations, the second type of scenarios may include, for example and without limitation, LTE-based RX interfered by Bluetooth-based TX, LTE-based TX interfering Bluetooth-based RX when CA is disabled, and LTE-based TX interfering Bluetooth-based RX when CA is enabled. In some implementations, the third type of scenarios may include, for example and without limitation, LTE-based TX interfering GNSS-based RX when CA is disabled, and LTE-based TX interfering GNSS-based RX when CA is enabled.

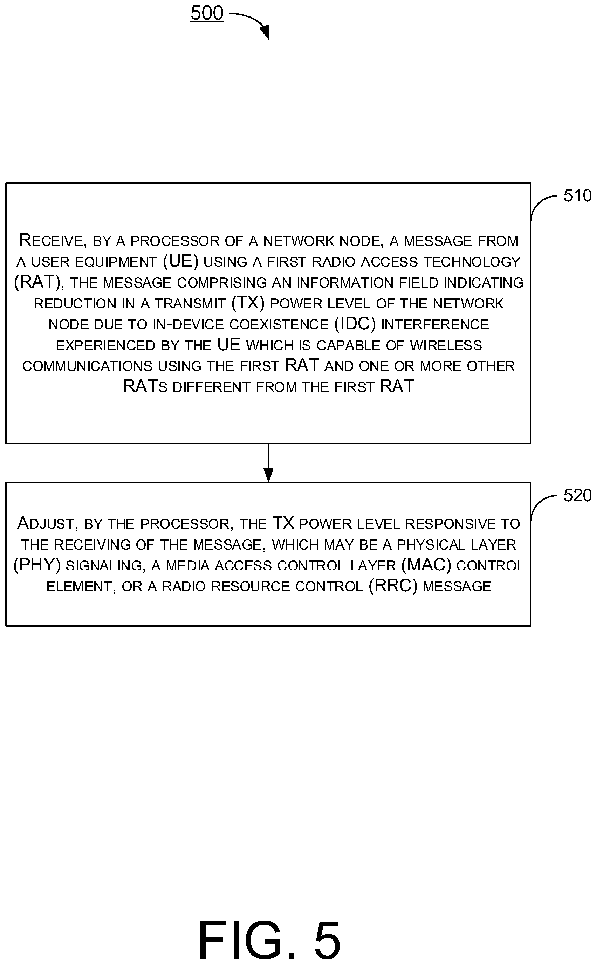

FIG. 5 illustrates an example process 500 in accordance with an implementation of the present disclosure. Process 500 may represent an aspect of implementing the proposed concepts and schemes such as one or more of the various schemes described above for addressing the first potential issue and/or the second potential issue. More specifically, process 500 may represent an aspect of the proposed concepts and schemes pertaining to mitigation of coexistence interference and concurrent operations of different RF technologies. For instance, process 500 may be an example implementation of the power-based solutions described above. Process 500 may include one or more operations, actions, or functions as illustrated by one or more of blocks 510 and 520. Although illustrated as discrete blocks, various blocks of process 500 may be divided into additional blocks, combined into fewer blocks, or eliminated, depending on the desired implementation. Moreover, the blocks/sub-blocks of process 500 may be executed in the order shown in FIG. 5 or, alternatively in a different order. The blocks/sub-blocks of process 500 may be executed iteratively. Process 500 may be implemented by or in apparatus 200 and/or apparatus 250 as well as any variations thereof. Solely for illustrative purposes and without limiting the scope, process 500 is described below in the context of apparatus 200 implemented as network node 110 in network environment 100. Process 500 may begin at block 510,

At 510, process 500 may involve processor 210 of apparatus 200 receiving, via transceiver 230, a message from apparatus 250 (e.g., as UE 120 in network environment 100) using a first RAT. The message may include an information field indicating reduction in a TX power level of radio tower 108 due to IDC interference experienced by apparatus 250 which is capable of wireless communications using the first RAT and one or more other RATs different from the first RAT. Process 500 may proceed from 510 to 520.

At 520, process 500 may involve processor 210 adjusting the TX power level in response to the receiving of the message. The message may include, for example and without limitation, a PHY signaling, a MAC control element, or an RRC message.

In some implementations, the first RAT may be based on one or more LTE-related standards, and the second RAT may be based on one or more IEEE 802.11-related standards (e.g., Wi-Fi). Moreover, the one or more other RATs may further include a third RAT based on Bluetooth and a fourth RAT based on GNSS.

In some implementations, in receiving the message, process 500 may involve processor 210 receiving a power headroom report that includes the information field.

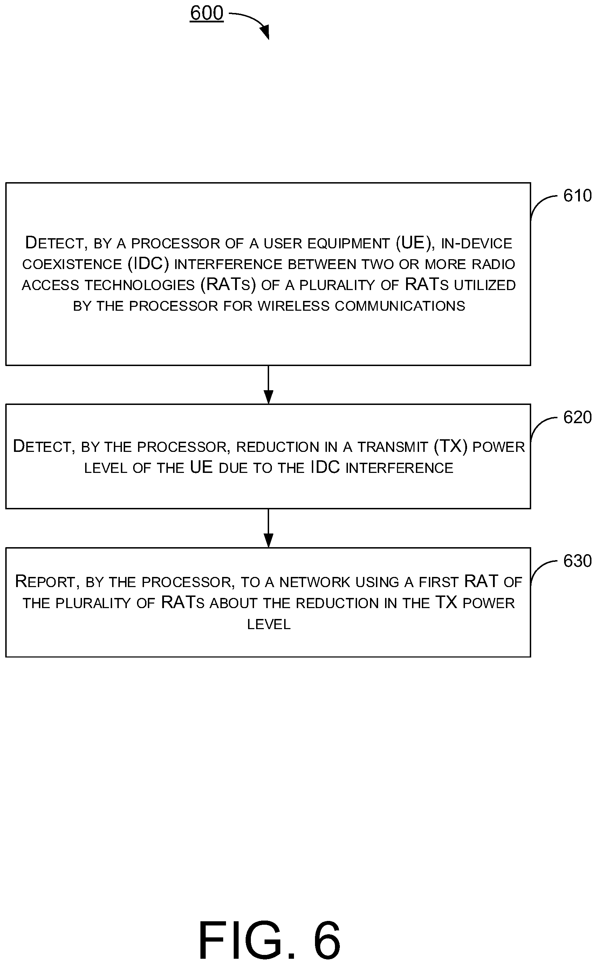

FIG. 6 illustrates an example process 600 in accordance with an implementation of the present disclosure. Process 600 may represent an aspect of implementing the proposed concepts and schemes such as one or more of the various schemes described above for addressing the first potential issue and/or the second potential issue. More specifically, process 600 may represent an aspect of the proposed concepts and schemes pertaining to mitigation of coexistence interference and concurrent operations of different RF technologies. For instance, process 600 may be an example implementation of the power-based solutions described above. Process 600 may include one or more operations, actions, or functions as illustrated by one or more of blocks 610, 620 and 630. Although illustrated as discrete blocks, various blocks of process 600 may be divided into additional blocks, combined into fewer blocks, or eliminated, depending on the desired implementation. Moreover, the blocks/sub-blocks of process 600 may be executed in the order shown in FIG. 6 or, alternatively in a different order. The blooks/sub-blocks of process 600 may be executed iteratively. Process 600 may be implemented by or in apparatus 200 and/or apparatus 250 as well as any variations thereof. Solely for illustrative purposes and without limiting the scope, process 600 is described below in the context of apparatus 250 implemented as UE 120 in network environment 100. Process 600 may begin at block 610.

At 610, process 600 may involve processor 260 of apparatus 250 detecting IDC interference in apparatus 250 between two or more RATs of a plurality of RATs utilized by processor 260 for wireless communications via transceiver 280. Process 600 may proceed from 610 to 620.

At 620, process 600 may involve processor 260 detecting reduction in a TX power level of apparatus 250 due to the IDC interference. Process 600 may proceed from 620 to 630.

At 630, process 600 may involve processor 260 reporting to apparatus 200 (e.g., as network node 110 of network 105 in network environment 100) using a first RAT of the plurality of RATs about the reduction in the TX power level.

In some implementations, the first RAT may be based on one or more LTE-related standards, In some implementations, the plurality of RATs may further include a second RAT based on one or more IEEE 802,11-related standards (e.g., Wi-Fi), a third RAT based on Bluetooth and a fourth RAT based on GNSS.

In some implementations, process 600 may further involve processor 260 changing a secondary cell that communicates using the first RAT in an event that LAA is enabled. Additionally or alternatively, process 600 may also involve processor 260 rescheduling a downlink resource block (RB) assignment.

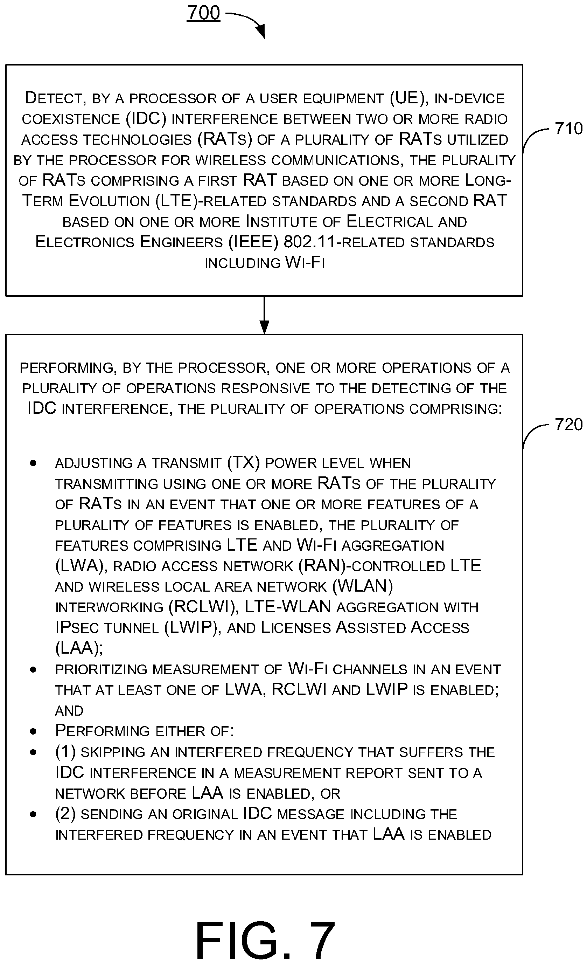

FIG. 7 illustrates an example process 700 in accordance with an implementation of the present disclosure. Process 700 may represent an aspect of implementing the proposed concepts and schemes such as one or more of the various schemes described above for addressing the first potential issue and/or the second potential issue. More specifically, process 700 may represent an aspect of the proposed concepts and schemes pertaining to mitigation of coexistence interference and concurrent operations of different RF technologies. For instance, process 700 may be an example implementation of the power-based solutions described above. Process 700 may include one or more operations, actions, or functions as illustrated by one or more of blocks 710 and 720. Although illustrated as discrete blocks, various blocks of process 700 may be divided into additional blocks, combined into fewer blocks, or eliminated, depending on the desired implementation. Moreover, the blocks/sub-blocks of process 700 may be executed in the order shown in FIG. 7 or, alternatively in a different order. The blocks/sub-blocks of process 700 may be executed iteratively. Process 700 may be implemented by or in apparatus 200 and/or apparatus 250 as well as any variations thereof. Solely for illustrative purposes and without limiting the scope, process 700 is described below in the context of apparatus 250 implemented as UE 120 in network environment 100. Process 700 may begin at block 710.

At 710, process 600 may involve processor 260 of apparatus 250 detecting IDC interference between two or more RATs of a plurality of RATs utilized by processor 260 for wireless communications via transceiver 280. The plurality of RATs may include a first RAT based on one or more LTE-related standards and a second RAT based on one or more IEEE 802.11-related standards including Wi-Fi. Process 700 may proceed from 710 to 720.

At 720, process 700 may involve processor 260 performing one or more operations of a plurality of operations in response to the detecting of the IDC interference. For instance, process 700 may involve processor 260 adjusting (e.g., lowering) a TX power level when transmitting using one or more RATs of the plurality of RATs in an event that one or more features of a plurality of features is enabled, such as LWA, RCLWI, LWIP and LAA. Additionally or alternatively, process 700 may involve processor 260 prioritizing measurement of Wi-Fi channels in an event that at least one of LWA, RCLWI and LWIP is enabled. Additionally or alternatively, process 700 may involve processor 260 performing either of the following: (1) skipping an interfered frequency that suffers the IDC interference in a measurement report sent to apparatus 200 (e.g., as network node 110 of network 105 in network environment 100) before LAA is enabled, or (2) sending an original IDC message including the interfered frequency in an event that LAA is enabled.

In some implementations, in prioritizing the measurement of Wi-Fi channels, process 700 may involve processor 260 measuring, via transceiver 280, one or more Wi-Fi channels not affected by the IDC interference. Additionally or alternatively, process 700 may involve processor 260 reporting, via transceiver 280, to apparatus 200 a result of the measuring. Additionally or alternatively, process 700 may involve processor 260 performing either of the following: (1) in an event that LTE transmission is a cause of the IDC interference, transmitting an original IDC message with the interfered frequency indicated therein, or (2) in an event that LTE transmission is not a cause of the IDS interference, transmitting, via transceiver 280, a WLAN status report to apparatus 200 to indicate the IDC interference on WLAN in an event that at least one of LWA, RCLWI and LWIP is enabled. In reporting the result of the measuring, process 700 may involve processor 260 reporting a measurement of each of the one or more Wi-Fi channels not affected by the IDC interference. Moreover, process 700 may involve processor 260 performing either of the following: (1) reporting no measurement of a Wi-Fi channel affected by the IDC interference, and (2) reporting a predefined value (e.g., a low value) for the Wi-Fi channel affected by the IDC interference such that the predefined value is indicative of the IDC interference and thus can inform apparatus 200 of the condition.

In some implementations, in skipping the interfered frequency that suffers the IDC interference in the measurement report sent to apparatus 200, process 700 may involve processor 260 identifying the interfered frequency among a plurality of frequencies to prevent the interfered frequency from becoming a candidate for use by a secondary cell for LAA. Moreover, process 700 may involve processor 260 sending, via transceiver 280, the measurement report in an IDC message excluding the interfered frequency. Alternatively, in an event that LAA has been activated and that transmission has begun before detecting the IDC interference on the interfered frequency, process 700 may involve processor 260 sending an original IDC message.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further , understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
receiving (310), by a processor (210) of a network node (110, 200), a message from a user equipment, UE (120, 250), using a first radio access technology, RAT, the message comprising one or more information fields indicating one or more of following pieces of information regarding in-device coexistence, IDC, interference experienced by the UE:
an affected carrier and a range of each of one or more other RATs different from the first RAT including at least a second RAT,
a suggested transmit, TX, or receive,RX, power of the UE in a first communication cell of the first RAT,
a suggested RX power of the UE in a second communication cell of the second RAT, and
an issue type identifying an issue of a first type or a second type experienced by the UE; and
adjusting (320), by the processor, one or more aspects of either or both of the first communication cell and the second communication cell responsive to the receiving of the message,
wherein the first type relates to IDC interference, and wherein the second type relates to concurrent operations of different RATs, wherein:
the one or more information fields indicate the suggested RX power of the UE in the second communication cell of the second RAT, and
the adjusting of the one or more aspects of either or both of the first communication cell and the second communication cell comprises:
requesting the UE to report a suggested RX power of the second communication cell in an event that the processor has enabled one or more features of a plurality of features with respect to the UE, the plurality of features comprising Long-Term Evolution ,LTE, and wireless local area network, WLAN, aggregation ,LWA, radio access network, RAN,-controlled LTE and WLAN interworking ,RCLWI, and LTE-WLAN aggregation with IPsec tunnel, LWIP;
receiving a message from the UE indicating the suggested RX power of the second communication cell; and
performing either or both of:
requesting the UE to report a threshold of a measurement report carrying the suggested RX power regarding the second RAT, and adjusting a TX power level of an access point ,AP, of the second communication cell.

2. The method of Claim 1, wherein the first RAT is based on one or more Long-Term Evolution, LTE,-related standards, and wherein the second RAT is based on one or more Institute of Electrical and Electronics Engineers, IEEE, 802.11-related standards.

3. The method of Claim 1 or 2, wherein;
the one or more information fields indicate the affected carrier and the range of each of the one or more other RATs, and
the adjusting of the one or more aspects of either or both of the first communication cell and the second communication cell comprises one or more of:
requesting the UE to stop measurement of a channel in the affected range of the second RAT in an event that the processor has enabled one or more features of a plurality of features with respect to the UE, the plurality of features comprising Long-Term Evolution ,LTE, and wireless local area network, WLAN, aggregation ,LWA, radio access network ,RAN,-controlled LTE and WLAN interworking ,RCLWI, and LTE-WLAN aggregation with IPsec tunnel, LWIP,
ceasing one or more operations requiring usage of the second RAT in an event that the processor has enabled one or more features of the plurality of features with respect to the UE, and
ceasing transmissions on a secondary cell of the first RAT, avoiding usage of one or more frequency bands, or rescheduling data to one or more resource blocks not suffering the IDC interference on the secondary cell in an event that the processor has enabled a feature of Licensed Assisted Access ,LAA, with respect to the UE.

4. The method of any of the Claims 1 to 3, wherein:
the one or more information fields indicate the suggested TX or RX power of the UE in the first communication cell of the first RAT, and
the adjusting of the one or more aspects of either or both of the first communication cell and the second communication cell comprises one or more of:
requesting the UE to transmit at a TX power level below a first threshold when the UE transmits using the first RAT in an event that the one or more information fields indicate the suggested TX power of the UE as a result of the one or more other RATs suffering interference from the first RAT in the UE, and
adjusting TX power used in communication with the UE to a TX power level above a second threshold when the processor communicates with the UE using the first RAT in an event that the one or more information fields indicate the suggested RX power of the UE as a result of the first RAT suffering interference from the one or more other RATs in the UE.

## Patentansprüche

1. Verfahren, umfassend:
Empfangen (310) einer Nachricht von einer Benutzereinrichtung, UE (120, 250), durch einen Prozessor (210) eines Netzwerkknotens (110, 200) unter Verwendung einer ersten Funkzugriffstechnologie, RAT, wobei die Nachricht ein oder mehrere Informationsfelder umfasst, die eine oder mehrere der folgenden Informationen über die von der UE erlebte Interferenz In Bezug auf die In-Device Koexistenz, IDC, anzeigen:
einen betroffenen Träger und einen Bereich von jeder von einer oder mehreren anderen RATs, die sich von der ersten RAT unterscheiden, einschließlich mindestens einer zweiten RAT,
eine vorgeschlagene Sende-TX oder Empfangs-, RX-Leistung der UE in einer ersten Kommunikationszelle der ersten RAT,
eine vorgeschlagene RX-Leistung der UE in einer zweiten Kommunikationszelle der zweiten RAT, und
einen Fehlertyp, der ein Problem eines ersten Typs oder eines zweiten Typs identifiziert, das von der UE erfahren wurde; und
Einstellen (320) eines oder mehrerer Aspekte einer oder beider der ersten Kommunikationszelle und der zweiten Kommunikationszelle durch den Prozessor, die auf den Empfang der Nachricht reagieren,
wobei sich der erste Typ auf IDC-Interferenzen bezieht, und wobei sich der zweite Typ auf gleichzeitige Operationen verschiedener RATs bezieht,
wobei:
das eine oder die mehreren Informationsfelder die vorgeschlagene RX-Leistung der UE in der zweiten Kommunikationszelle der zweiten RAT anzeigen, und
das Einstellen des einen oder der mehreren Aspekte von einer oder beiden der ersten Kommunikationszelle und der zweiten Kommunikationszelle umfasst:
Aufforderung an die UE, eine vorgeschlagene RX-Leistung der zweiten Kommunikationszelle für den Fall zu melden, dass der Prozessor ein oder mehrere Merkmale einer Vielzahl von Merkmalen In Bezug auf die UE aktiviert hat, wobei die Vielzahl von Merkmalen Langzeitentwicklung ,LTE und drahtloses lokales Netzwerk WLAN, Aggregation ,LWA, Funkzugangsnetzwerk, RAN, -gesteuerte LTE und WLAN-Interworking RCLWI und LTE-WLAN-Aggregation mit IPsec-Tunnel, LWIP umfasst;
Empfangen einer Nachricht von der UE, die die vorgeschlagene Empfangslelstung der zweiten Kommunikatlonszelle anzeigt; und
Ausführen eines oder beider der folgenden Schritte:
Aufforderung an die EU, einen Schwellenwert für einen Messbericht mit der vorgeschlagenen RX-Leistung für die zweite RAT zu melden, und
Einstellen eines Sendeleistungspegels eines Zugangspunktes ,AP, der zweiten Kommunikationszelle.

2. Verfahren nach Anspruch 1, wobei die erste RAT auf einem oder mehreren LTE-bezogenen Standards für langfristige Entwicklung basiert, und wobei die zweite RAT auf einem oder mehreren Standards des Institute of Electrical and Electronics Engineers, IEEE, 802.11-bezogenen Standards basiert.

3. Verfahren nach Anspruch 1 oder 2, wobei:
das eine oder die mehreren Informationsfelder den betroffenen Träger und den Bereich jeder der anderen RATs angeben und
das Einstellen des einen oder der mehreren Aspekte von einer oder beiden der ersten Kommunikationszelle und der zweiten Kommunikationszelle umfasst einen oder mehrere von:
Aufforderung an die UE, die Messung eines Kanals im betroffenen Bereich der zweiten RAT zu stoppen, falls der Prozessor ein oder mehrere Merkmale einer Vielzahl von Merkmalen in Bezug auf die UE aktiviert hat, wobei die Vielzahl von Merkmalen LTE und drahtloses lokales Netzwerk, WLAN, Aggregation, LWA, Funkzugangsnetz, RAN,-gesteuerte LTE- und WLAN-Interworking, RCLWI und LTE-WLAN-Aggregation mit IPsec-Tunnel LWIP umfasst,
Beenden eines oder mehrerer Vorgänge, die die Verwendung der zweiten RAT erfordern, in einem Fall, in dem der Prozessor ein oder mehrere Merkmale der Vielzahl von Merkmalen in Bezug auf die UE aktiviert hat, und
Beenden von Übertragungen auf einer Sekundärzelle der ersten RAT, Vermeiden der Verwendung eines oder mehrerer Frequenzbänder oder Umschichten von Daten auf einen oder mehrere Ressourcenblöcke, die nicht unter der IDC-Interferenz auf der Sekundärzelle leiden, für den Fall, dass der Prozessor eine Funktion von Licensed Assisted Access ,LAA in Bezug auf die EU aktiviert hat.

4. Verfahren nach einem der Ansprüche 1 bis 3, wobei:
das eine oder die mehreren Informationsfelder, die vorgeschlagene Sende- oder Empfangsleistung der UE in der ersten Kommunikationszelle der ersten RAT anzeigen, und
das Einstellen des einen oder der mehreren Aspekte von einer oder beiden der ersten Kommunikationszelle und der zweiten Kommunikationszelle umfasst einen oder mehrere von:
Aufforderung an die UE, mit einer Sendeleistung unterhalb eines ersten Schwellenwerts zu senden, wenn die UE mit der ersten RAT sendet, falls das eine oder die mehreren Informationsfelder die vorgeschlagene Sendeleistung der UE als Ergebnis der einen oder mehreren anderen RATs anzeigen, die unter Störungen der ersten RAT in der UE leiden, und
Einstellen der in der Kommunikation mit der UE verwendeten TX-Leistung auf einen TX-Leistungspegel oberhalb eines zweiten Schwellenwerts, wenn der Prozessor mit der UE unter Verwendung der ersten RAT kommuniziert, falls das eine oder die mehreren Informationsfelder die empfohlene RX-Leistung der UE als Ergebnis der ersten RAT anzeigen, die unter Störungen durch die eine oder die mehreren anderen RATs in der UE leidet.

## Revendications

1. Un procédé comprenant les étapes consistant à:
recevoir (310) par un processeur (210) d'un noeud de réseau (110, 200), un message émanant d'un équipement utilisateur, UE (120, 250), en utilisant une première technologie d'accès radio, RAT, le message comprenant un ou plusieurs champs d'information indiquant une ou plusieurs des informations suivantes en ce qui concerne l'interférence de coexistence dans l'appareil, IDC, subi par l'UE:
une porteuse affectée et une plage de chacun d'un ou plusieurs autres RAT différents du premier RAT comprenant au moins un deuxième RAT,
une transmission suggérée, TX, ou réception, RX, de l'UE au sein d'une première cellule de communication du premier RAT,
une puissance RX suggérée de l'UE au sein d'une seconde cellule de communication du second RAT, et
un type de problème identifiant un problème d'un premier type ou d'un second type rencontré par le UE; et
ajuster (320), par le processeur, un ou plusieurs aspects de l'une ou l'autre ou des deux cellules parmi la première cellule de communication et la seconde cellule de communication en réponse à la réception du message,
dans lequel le premier type se rapporte à une interférence IDC, et dans lequel deuxième type se rapporte à des opérations différentes de différents RAT, dans lequel
l'un ou plusieurs champs d'information indique la puissance RX suggérer de l'UE dans la seconde cellule de communication du second RAT, et
le réglage d'un ou plusieurs aspects de l'un ou l'autre ou des deux cellules parmi la première cellule de communication et la seconde cellule de communication comporte :
demander à l'UE de rendre compte d'une puissance RX suggérer de la seconde cellule de communication dans le cas où le processeur a activé une ou plusieurs fonctionnalités parmi une pluralité de fonctionnalités relativement à l'UE, la pluralité de fonctionnalités comprenant l'Evolution à long terme, LTE, et le réseau local sans fil, WLAN, Agrégation, LWA, le réseau d'accès radio, RAN, l'interfonctionnement LTE et WLAN contrôlé, RCLWI, et l'agrégation LTE-WLAN avec tunnel IPsec, LWIP ;
la réception d'un message de l'UE indiquant la puissance RX suggérée de la seconde cellule de communication ; et
la mise en oeuvre au sein de l'une ou l'autre ou de les deux ;
demander à l'UE de rendre compte d'un seuil d'un rapport de mesure portant la puissance RX suggérée relativement à la seconde RAT, et
régler un niveau de puissance TX d'un point d'accès, AP, de la seconde cellule de communication.

2. Le procédé de la revendication 1, dans lequel le premier RAT est basé sur un ou plusieurs standards liés à l'Evolution à long terme, LTE, et dans lequel le deuxième RAT est basé sur un ou plusieurs standards propres à IEEE, 802.11.

3. Le procédé de la revendication 1 ou 2, dans lequel:
le ou les champs d'information indiquent la porteuse affectée et la plage de chacun des un ou plusieurs autres RAT, et
l'ajustement du ou des aspects de l'un ou des deux parmi la première et la seconde cellules de communication comprend un ou plusieurs des éléments suivants:
demande à l'UE d'interrompre la mesure d'un canal dans la plage affectée du deuxième RAT dans le cas où le processeur a activé une ou plusieurs fonctionnalités au sein d'une pluralité de fonctionnalités comprenant l'Evolution à long terme, LTE, et le réseau local sans fil, WLAN, Agrégation, LWA, le réseau d'accès radio, RAN, l'interfonctionnement LTE et WLAN contrôlé, RCLWI, et l'agrégation LTE-WLAN avec tunnel IPsec, LWIP ,
la cessation d'une ou plusieurs opérations nécessitant l'utilisation du deuxième RAT dans un événement où le processeur a activé une ou plusieurs fonctionnalités de la pluralité de fonctionnalités par rapport à l'UE, et
la cessation des transmissions sur une cellule secondaire du premier RAT, en évitant d'utiliser une ou plusieurs bandes de fréquence, ou en reprogrammant les données sur un ou plusieurs blocs de ressources ne subissant pas d'interférence IDC sur la cellule secondaire lorsqu'un processeur a activé une fonctionnalité d'accès assisté sous licence, LAA, en ce qui concerne UE.

4. Le procédé selon l'une quelconque des revendications 1 à 3, dans lequel:
le ou les champs d'information indiquent la puissance TX ou RX suggérée de l'UE dans la première cellule de communication du premier RAT, et
l'ajustement du ou de plusieurs aspects de l'un ou l'autre ou à la fois de la première cellule de communication et de la seconde cellule de communication comprend un ou plusieurs des éléments suivants:
demander à l'UE d'émettre à un niveau de puissance TX inférieur à un premier seuil lorsque l'UE transmet en utilisant le premier RAT dans un événement tel que indique la puissance d'émission suggérée de l'UE à la suite de l'intervention d'un ou plusieurs autres RAT subissant une interférence émanant du premier RAT dans l'UE, et
régler la puissance d'émission TX utilisée dans la communication avec l'UE à un niveau de puissance d'émission supérieur à un second seuil lorsque le processeur communique avec l'UE en utilisant le premier RAT dans un événement où un ou plusieurs champs d'information indiquent la puissance RX suggérée de l'UE à la suite de la première RAT subissant une interférence du ou des autres RAT dans l'UE.
